# EUROPÄISCHE PATENTANMELDUNG

(11) **EP 3 979 466 A1**
(43) Veröffentlichungstag der Anmeldung: **06.04.2022**
(21) Anmeldenummer: 20199239.3
(22) Anmeldetag: 30.09.2020
(51) Int. Cl.: H02K 1/04, H01F 1/18, H02K 15/02, C21D 8/12

(54) **ELEKTRISCHE MASCHINE UND ANLAGE**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Die elektrische Maschine weist einen Stator (80) und/oder Rotor mit einem Stapel (10) weichmagnetischer Bleche (20) auf, welche einander an Flachseiten (30, 50) der Bleche (20) nah sind, bei welcher mindestens eine der Flachseiten (50), an welcher zwei benachbarte Bleche einander nah sind, mit einer Sinterhaut (55) gebildet ist.

Die Anlage und das Fahrzeug weisen eine solche elektrische Maschine auf.

## Beschreibung

Die Erfindung betrifft eine elektrische Maschine mit einem Rotor und/oder Stator, aufweisend einen Stapel weichmagnetischer Bleche, sowie eine Anlage mit einer elektrischen Maschine.

Es ist bekannt, elektrische Maschinen mit Rotoren und/oder Statoren auszubilden, welche jeweils mit Stapeln weichmagnetischer Bleche gebildet sind.

Solche Stapel weichmagnetischer Bleche müssen aufwändig montiert und elektrisch isoliert werden, damit keine Wirbelströme oder Spannungsüberschläge beim Betrieb der Elektromotoren auftreten.

Es ist daher Aufgabe der Erfindung, eine verbesserte elektrische Maschine mit einem Rotor und/oder Stator mit einem Stapel weichmagnetischer Bleche zu schaffen, bei welcher eine Montage und/oder eine elektrische Isolierung der weichmagnetischen Bleche kostengünstig und unaufwendig realisiert werden können. Zudem soll die erfindungsgemäße elektrische Maschine vorzugsweise auch mit neuartigen Fertigungsverfahren zur Herstellung der weichmagnetischen Bleche fertigbar sein. Weiterhin ist es Aufgabe der Erfindung, eine verbesserte Anlage mit einer elektrischen Maschine zu schaffen.

Diese Aufgabe der Erfindung wird mit einer elektrischen Maschine mit den in Anspruch 1 angegebenen Merkmalen und mit einer Anlage mit den in Anspruch 10 angegebenen Merkmalen gelöst. Bevorzugte Weiterbildungen der Erfindung sind in den zugehörigen Unteransprüchen, der nachfolgenden Beschreibung und der Bezeichnung angegeben.

Die erfindungsgemäße elektrische Maschine weist einen Stator und/oder einen Rotor mit einem Stapel weichmagnetischer Bleche auf. Die weichmagnetischen Bleche der erfindungsgemäßen elektrischen Maschine sind einander an Flachseiten der Bleche nah, wobei mindestens eine der Flachseiten, an welcher zwei benachbarte Bleche einander nah sind, mit einer Sinterhaut gebildet ist.

Die bei der erfindungsgemäßen elektrischen Maschine vorhandene Sinterhaut ermöglicht vorteilhaft eine homogene und gleichmäßige Benetzung der Sinterhaut und folglich auch der Flachseiten der Bleche der erfindungsgemäßen elektrischen Maschine. Folglich lassen sich die Bleche des Stapels der erfindungsgemäßen elektrischen Maschine besonders leicht mit einer Isolationsschicht und/oder einer Klebeschicht benetzen. Infolge der verbesserten Benetzbarkeit der Bleche kann die erfindungsgemäße elektrische Maschine mit einer homogenen und gleichmäßigen Isolationsschicht und/oder Klebeschicht versehen sein, wobei die elektrische Leistungsfähigkeit der elektrischen Maschine verglichen mit dem Stand der Technik besonders groß ausgestaltet werden kann.

Vorteilhaft ist eine Sinterhaut leicht mit isotrop orientierten, d. h. nicht texturierten, Korngrößen mit Durchmessern zweckmäßig zwischen 10 und 500 Mikrometern ausbildbar, welche vorzugsweise eine mittlere Rauheit zwischen 0,2 Mikrometern und 5 Mikrometern aufweist. Gerade bei einer mit einer Sinterhaut gebildeten Oberfläche sind sehr flache Kornoberflächen ohne spezifische, aus dem Korn herausragende Spitzen sowie an der Oberfläche vertiefte Korngrenzen mit abgerundeten Flanken realisierbar. Zweckmäßig lässt sich eine Sinterhaut im Bereich einer einem Trägersubstrat beim Drucken zugewandten Oberfläche verschieden ausbilden zu einer von dem Trägersubstrat beim Drucken abgewandten Flachseite oder einer sich von dem Trägersubstrat fortstreckenden Kantenfläche. Damit lassen sich die Bleche vorteilhaft mit Flachseiten mit unterschiedlicher Farbe und/oder Reflexion und/oder Oberflächenstruktur ausbilden. Auf diese Weise lassen sich Flachseiten der Bleche leicht optisch unterscheiden, sodass eine Anordnung der Bleche zu einem Stapel besonders einfach bewerkstelligbar und vorzugsweise automatisierbar ist.

In einer bevorzugten Weiterbildung der erfindungsgemäßen elektrischen Maschine sind die Bleche Siebdruck- und/oder Schablonendruckteile oder weisen Siebdruck- und/oder Schablonendruckteile auf.

Vorteilhaft sind die Bleche in dieser Weiterbildung der Erfindung vorzugsweise solche Sieb- und/oder Schablonendruckteile, bei welchen die Bleche mittels einer mit Metallpulver gebildeten Druckpaste gedruckt und anschließend gesintert werden. Auf diese Weise lässt sich eine geometrische Form der Bleche besonders einfach mittels Schablonendrucks realisieren, sodass subtraktive Bearbeitungsschritte zur Fertigung der erfindungsgemäßen elektrischen Maschine verzichtbar sind. Weiterhin vorteilhaft weisen die Bleche in dieser Weiterbildung der Erfindung keine induzierten mechanischen Spannungen infolge von Umformprozessen wie insbesondere Walz- oder Stanzprozessen auf, weshalb die weichmagnetischen Eigenschaften der weichmagnetischen Bleche unbeeinträchtigt beibehalten werden können.

Bevorzugt ist bei der elektrischen Maschine gemäß der Erfindung die Sinterhaut eine As-Fired-Sinterhaut.

Bei der elektrischen Maschine gemäß der Erfindung ist die Sinterhaut bevorzugt mit einem oder mehreren Metalloxiden und/oder -nitriden und/oder -carbiden und/oder siliziden oder einer Kombination einer oder mehrerer der vorgenannten Materialien gebildet. Bevorzugt und vorteilhaft weist die Sinterhaut zudem Zuschlagsstoffe auf, welche etwa eutektika- oder flüssigphasen-bildend sind. Auf diese Weise kann die Sinterhaut an den Kornoberflächen mit Mischkristallen ausgebildet sein, sodass charakteristische Oberflächenenergien und/oder Benetzungswinkel der Bleche hinsichtlich einer homogeneren und gleichmäßigeren Benetzbarkeit beeinflusst sind.

In einer vorteilhaften Weiterbildung der erfindungsgemäßen elektrischen Maschine weist diese mindestens eine Klebeschicht auf, welche einander nahe Bleche des Stapels miteinander verbindet, wobei die Klebeschicht vorzugweise jeweils an der Sinterhaut angeordnet ist. In dieser Weiterbildung sind die Bleche des Stapels vorteilhaft haftend miteinander verbunden, wobei infolge der verbesserten Benetzbarkeit der weichmagnetischen Bleche mit der Klebeschicht zugleich eine besonders hohe elektrische Leistungsfähigkeit der elektrischen Maschine erzielt werden kann.

Die elektrische Maschine weist in einer alternativen oder zusätzlichen Weiterbildung der Erfindung mindestens eine Isolierschicht auf, welche einander nahe Bleche des Stapels voneinander elektrisch isoliert, wobei die Isolierschicht jeweils an der oder einer Sinterhaut angeordnet ist. In dieser Weiterbildung der Erfindung sind die Bleche des Stapels vorteilhaft zuverlässig elektrisch gegeneinander isoliert, wobei infolge der verbesserten Benetzbarkeit der weichmagnetischen Bleche mit der Isolierschicht zugleich eine besonders hohe elektrische Leistungsfähigkeit einer mit dem Stapel realisierten elektrischen Maschine erzielt werden kann.

Bei der elektrischen Maschine gemäß der Erfindung weisen die Bleche je eine erste und eine zweite Flachseite auf, wobei sich die Bleche von erster zu zweiter Flachseite verjüngen und wobei die ersten Flachseiten der Bleche des Stapels in dieselbe Richtung weisen. Auf diese Weise lassen sich die Flachseiten der Bleche voneinander unterscheiden, sodass insbesondere bei Blechen, bei welchen genau eine von zwei Flachseiten mit Metalloxid gebildet ist, die mit Metalloxid gebildete Seite leicht aufgrund der geometrischen Form erkannt werden kann.

Bei der erfindungsgemäßen elektrischen Maschine weisen die Bleche bevorzugt je eine erste und eine zweite Flachseite auf, wobei zumindest die zweite Flachseite jeweils mit einer Sinterhaut gebildet ist und die Bleche mit ihrer zweiten Flachseite in dieselbe Richtung weisen. Auf diese Weise können sämtliche Bleche oder sämtliche Bleche bis auf eines oder zwei randständiger Bleche des Stapels auf eine identische Weise ausgebildet sein. Folglich lassen sich die Bleche nahezu sämtlich auf eine identische Weise fertigen. Somit kann eine Fertigung der erfindungsgemäßen elektrischen Maschine ohne Abweichungen oder erforderliche manuelle Eingriffe kostengünstig erfolgen.

Bei der erfindungsgemäßen elektrischen Maschine weisen die Bleche jeweils an erster und zweiter Flachseite eine Sinterhaut auf.

Die erfindungsgemäße Anlage und das erfindungsgemäße Fahrzeug weisen eine erfindungsgemäße elektrische Maschine wie oben beschrieben auf.

Nachfolgend wird die Erfindung anhand eines in der Zeichnung dargestellten Ausführungsbeispiels näher erläutert.

Es zeigen:
- Fig. 1: einen Stapel weichmagnetischer Bleche eines Stators einer erfindungsgemäßen elektrischen Maschine schematisch im Querschnitt sowie

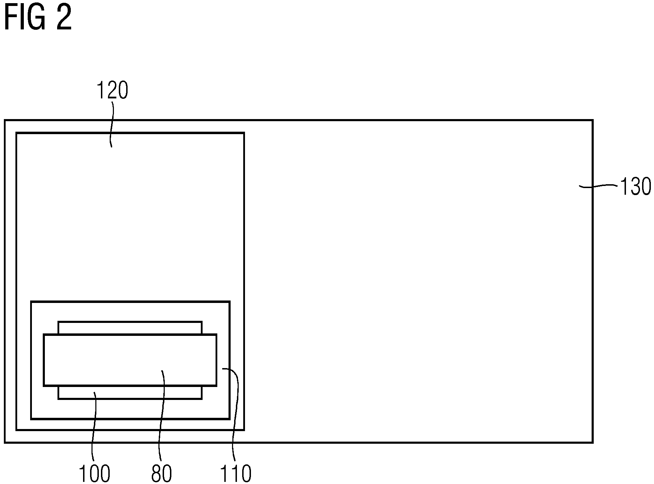

- Fig. 2: eine erfindungsgemäße Industrieanlage mit einem Antrieb mit der erfindungsgemäßen elektrischen Maschine mit dem Stator mit dem Stapel weichmagnetischer Bleche gemäß Fig. 1 schematisch in einer Prinzipskizze.

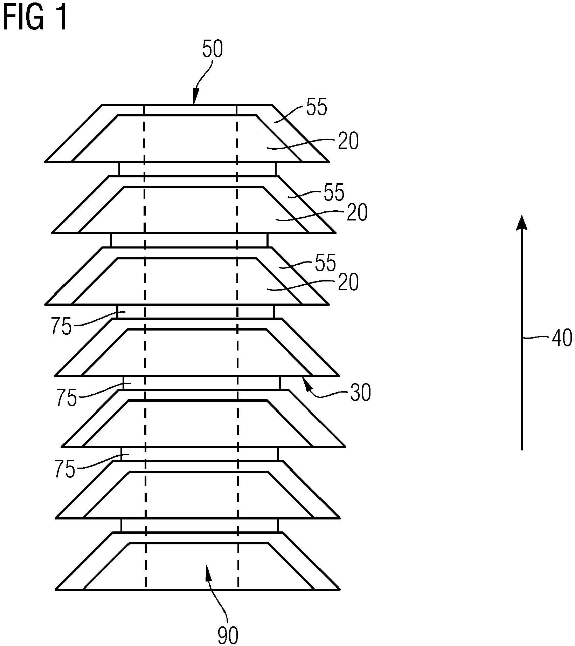

Der in Fig. 1 dargestellte Stapel 10 ist mit weichmagnetischen Blechen 20 gebildet und bildet einen Stator einer erfindungsgemäßen elektrischen Maschine in Gestalt eines Elektromotors.

Die weichmagnetischen Bleche 20 des Stapels 10 sind mittels Sieb- und Schablonendrucks einer Metallpaste weichmagnetischen Metalls, beispielsweise Reineisens, gefertigt und weisen jeweils äußerlich die Gestalt eines Kegelstumpfs mit einer kreisförmigen Grundfläche 30 auf. Zusätzlich sind die äußerlich kegelstumpfförmigen weichmagnetischen Bleche 20 mit einer zentralen Durchführung versehen, in der ein Rotor der erfindungsgemäßen elektrischen Maschine vorgesehen ist. Die weichmagnetischen und äußerlich kegelstumpfförmigen Bleche 20 verjüngen sich jeweils in einer Stapelrichtung 40 von der Grundfläche 30 zu einer einen im Vergleich zur Grundfläche 30 kleineren äußeren Durchmesser aufweisenden und zur Grundfläche parallelen Stirnfläche 50. Die Stirnflächen 50 der weichmagnetischen Bleche 20 sind mit einer Sinterhaut 55, hier einer As-Fired-Sinterhaut, der weichmagnetischen Bleche 20 gebildet. Die Sinterhaut 55 ist im gezeigten Ausführungsbeispiel durch den Fertigungsprozess bedingt und wird nach der Fertigung nicht entfernt, sondern vor einer Fügung der weichmagnetischen Bleche 20 zu einem Stapel an den weichmagnetischen Blechen 20 belassen. Die Sinterhaut 55 ist im dargestellten Ausführungsbeispiel mit Metalloxid, hier Reineisenoxid, gebildet. In weiteren, nicht eigens dargestellten Ausführungsbeispielen kann die Sinterhaut 55 alternativ oder zusätzlich mit einem oder mehreren Metallnitriden und/oder einem oder mehreren Metallcarbiden und/oder einem oder mehreren Metallsiliziden gebildet sein.

Die kegelstumpfförmige Gestalt sowie die Sinterhaut 55 der weichmagnetischen Bleche 20 ist mittels der Fertigung der weichmagnetischen Bleche 20 durch Sieb- und Schablonendruck realisiert: die weichmagnetischen Bleche 20 werden mittels einer Schablone mit einem kreisringförmigen Loch auf ein Substrat als kreiszylindrisches Grünteile mit einer inneren kreiszylindrischen Durchführung gedruckt. Das Substrat ist jeweils mit derart hoher Oberflächenrauigkeit gebildet, dass das Grünteil an seiner Auflagefläche auf dem Substrat, welche die spätere Grundfläche 30 des späteren weichmagnetischen Blechs 20 bildet, einer auftretenden Sinterschwindung bei einem anschließenden Sintern des Grünteils nicht folgen kann. Das Grünteil wird nachfolgend gesintert. Folglich schwindet das Grünteil fern der Auflagefläche in einem stärkeren Ausmaß als an der Auflagefläche, an welcher die Sinterschwindung sogar vollständig aufgrund der Oberflächenrauigkeit verschwindet. Infolge der lokal verschiedenen Sinterschwindung verringert sich eine Stirnfläche des Grünteils, welche die spätere Stirnfläche 50 des weichmagnetischen Blechs 20 bildet, gegenüber der Auflagefläche in ihrem Durchmesser, sodass das Grünteil beim Sintern eine äußere kegelstumpfförmige Gestalt gewinnt (im Inneren gewinnt die ursprünglich zylindrische Durchführung ebenfalls eine kegelstumpfförmige Gestalt).

An der Stirnfläche 50 des weichmagnetischen Blechs 20 bildet sich die Sinterhaut 55 beim Sintern als As-Fired-Sinterhaut aus. Infolge des Sinterns des Grünteils auf dem Substrat und infolge der gewählten Prozessbedingungen bildet sich die As-Fired-Sinterhaut lediglich an der dem Substrat abgewandten Oberfläche der weichmagnetischen Bleche 20 aus. Auf diese Weise ist jeweils die Stirnfläche 50 der weichmagnetischen Bleche 20 mit der Sinterhaut 55 ausgebildet. Entsprechend lassen sich die weichmagnetischen Bleche 20 nach dem Sintern mit ihrer Stirnfläche 50 und folglich mit ihrer Sinterhaut 55 gleichartig orientiert anordnen, sodass jeweils benachbarte weichmagnetische Blechen 20 an einer Sinterhaut 55 einander nah sind.

Nach dem Sintern wird das gesinterte weichmagnetische Blech 20 vom Substrat gelöst und mit weiteren gleichartig gefertigten weichmagnetischen Blechen 20 zum Stapel 10 verbunden. Dabei werden die weichmagnetischen Bleche 20 wie oben bereits erwähnt derart miteinander verbunden, dass die Grundflächen 30 der weichmagnetischen Bleche 20 jeweils in dieselbe Richtung (hier entgegengesetzt zur Stapelrichtung 40) weisen. Die Stirnflächen 50 der weichmagnetischen Bleche 20 des Stapels 10 weisen entsprechend in Stapelrichtung 40. Dabei sind die weichmagnetischen Bleche 20 mit einer zwischenliegenden Klebeschicht 75 aneinander gefügt. Die Klebeschicht 75 wird im flüssigen Zustand auf die Sinterhaut 55 der Bleche 20 gegeben, wonach sich die Klebeschicht 75 mit einer homogenen Dicke gleichmäßig auf der Sinterhaut 55 verteilt. In weiteren, nicht eigens dargestellten Ausführungsbeispielen ist alternativ oder zusätzlich zur Klebeschicht 75 eine Isolierschicht zwischen den Blechen 20 vorhanden, welche ebenfalls im flüssigen Zustand die Sinterhaut 55 benetzen kann.

In weiteren, nicht explizit gezeigten Ausführungsbeispielen, welche im Übrigen dem dargestellten Ausführungsbeispiel entsprechen, können die weichmagnetischen Bleche 20 auch mit einer anderen geometrischen Form, etwa als mathematische Zylinder mit kreisringförmiger Grundfläche, ausgebildet werden, wobei entweder eine oder auch beide voneinander abgewandte Stirnflächen sowie die Mantelflächen mit einer Sinterhaut gebildet sind. Die Ausbildung der Stirnflächen und Mantelflächen mit einer Sinterhaut kann beispielsweise mittels einer entsprechenden Anpassung der Parameter des Sinterprozesses sowie mittels einer geeigneten Sinterunterlage erreicht werden.

Der Stapel 10 weichmagnetischer Bleche 20 ist in einer Stapelfassung (nicht explizit gezeigt) gehalten. Die Stapelfassung ist von dem Stapel 10 mittels einer Isolierung in Gestalt eines Isolierpapiers (nicht explizit gezeigt) elektrisch isoliert. Alternativ oder zusätzlich kann in weiteren, nicht eigens dargestellten Ausführungsbeispielen die kegelstumpfförmige Gestalt bereits beim Druck der Grünteile der weichmagnetischen Bleche 20 vorgesehen werden, sodass eine Sinterung wie oben beschrieben die Ausbildung der kegelstumpfförmigen Gestalt verstärkt, aber nicht allein bedingt. Alternativ oder zusätzlich kann die äußere kegelstumpfförmige Gestalt auch ausschließlich durch einen 3D-Druck des Grünteils vorgegeben sein, sodass eine Oberflächenrauigkeit des Substrats wie oben beschrieben verzichtbar ist.

Der Stapel 10 bildet mit dem Isolierpapier und der Stapelfassung einen Stator 80 einer erfindungsgemäßen elektrischen Maschine 100 aus. Dazu bilden die Durchführungen der Bleche 20 in dem Stapel 10 eine zentrale, in Stapelrichtung 40 führende, zentrale Durchführung 90 aus. Im dargestellten Ausführungsbeispiel ist die Durchführung jeweils beim Druck der weichmagnetischen Bleche 20 vorgesehen, indem die Bleche 20 als Kreisringe gedruckt werden. Alternativ kann die Durchführung 90 auch nachträglich subtraktiv vorgesehen werden, beispielsweise mittels Fräsens.

Zur Bildung einer erfindungsgemäßen elektrischen Maschine 90 wird in die Durchführung des Stators 80 ein Rotor 100 eingebracht, der grundsätzlich gleichartig wie der Stator 80 gefertigt werden kann, mit Ausnahme der Durchführung 90 sowie der Stapelfassung und des Isolierpapieres, welche für einen Rotor 100 verzichtbar sind. Der Stator 80 ist zur Bildung einer elektrischen Maschine 100 in an sich bekannter Weise (in der Zeichnung nicht explizit gezeigt) mit Spulen und einer elektrischen Speisung der Spulen versehen.

Die elektrische Maschine 110 ist im gezeigten Ausführungsbeispiel ein Elektromotor ein Teil eines Antriebs 120 einer Industrieanlage 130, hier einer Fließbandanlage. In weiteren, nicht eigens dargestellten Ausführungsbeispielen ist die erfindungsgemäße elektrische Maschine ein Elektromotor und Teil eines Antriebs eines autonomen Lagerfahrzeugs oder ein elektrischer Generator einer Energiewandler-Einrichtung einer Energiegewinnungsanlage, beispielsweise eines Windrads.

## Patentansprüche

1. Elektrische Maschine mit einem Stator (80) und/oder Rotor mit einem Stapel (10) weichmagnetischer Bleche (20), welche einander an Flachseiten (30, 50) der Bleche (20) nah sind, bei welcher mindestens eine der Flachseiten (50), an welcher zwei benachbarte Bleche einander nah sind, mit einer Sinterhaut (55) gebildet ist.

2. Elektrische Maschine nach dem vorhergehenden Anspruch, bei welcher die Bleche (20) Siebdruck- und/oder Schablonendruckteile sind oder aufweisen.

3. Elektrische Maschine nach dem vorhergehenden Anspruch, bei welcher die Sinterhaut (55) eine As-Fired-Sinterhaut ist.

4. Elektrische Maschine nach einem der vorhergehenden Ansprüche, bei welcher die Sinterhaut (55) mit einem oder mehreren Metalloxiden und/oder -nitriden und/oder - carbiden und/oder siliziden gebildet ist.

5. Elektrische Maschine nach einem der vorhergehenden Ansprüche mit mindestens einer Klebeschicht, welche einander nahe Bleche des Stapels miteinander verbindet, wobei die Klebeschicht jeweils an der oder einer Sinterhaut angeordnet ist.

6. Elektrische Maschine nach einem der vorhergehenden Ansprüche mit mindestens einer Isolierschicht (75), welche einander nahe Bleche (20) des Stapels (10) voneinander elektrisch isoliert, wobei die Isolierschicht (75) jeweils an der oder einer Sinterhaut (55) angeordnet ist.

7. Elektrische Maschine nach einem der vorhergehenden Ansprüche, bei welcher die Bleche (20) je eine erste (30) und eine zweite Flachseite (50) aufweisen, wobei sich die Bleche (20) von erster (30) zu zweiter Flachseite (50) verjüngen und wobei die ersten Flachseiten (30) der Bleche (20) des Stapels (10) in dieselbe Richtung weisen.

8. Elektrische Maschine nach einem der vorhergehenden Ansprüche, bei welcher die Bleche (20) je eine erste (30) und eine zweite Flachseite (50) aufweisen, wobei die zumindest die zweite Flachseite (50) jeweils mit einer Sinterhaut (55) gebildet ist und die Bleche (20) mit ihrer zweiten Flachseite (50) in dieselbe Richtung weisen.

9. Elektrische Maschine nach einem der vorhergehenden Ansprüche, bei welcher die Bleche (20) je an erster (30) und zweiter Flachseite (50) eine Sinterhaut (55) aufweisen.

10. Anlage und/oder Fahrzeug mit einer elektrischen Maschine (110) nach einem der vorhergehenden Ansprüche.
